# EUROPÄISCHE PATENTANMELDUNG

(11) **EP 1 037 155 A2**
(43) Veröffentlichungstag der Anmeldung: **20.09.2000**
(21) Anmeldenummer: 00105605.0
(22) Anmeldetag: 16.03.2000
(51) Int. Cl.: G06F 17/60

(54) **Verfahren zum Vermitteln von Kommunikationsteilnehmern und Vorrichtung zur Durchführung des Verfahrens**

(30) Priorität: 18.03.1999 DE 19912193
(71) Anmelder: SIEMENS AKTIENGESELLSCHAFT, 80333 München (DE)
(72) Erfinder: Kriete, Viola, 81825 München (DE); Davutoglu, Can, 81637 München (DE)

(57) **Zusammenfassung**

Die Erfindung betrifft ein Verfahren und eine Vorrichtung zum automatischen Zusammenschalten von Kommunikationsteilnehmern, insbesondere Anbietern und Nachfragern von Informationen, Dienstleistungen und Waren.

In einer Ausgestaltungsform, versucht die zentrale Vorrichtung, welche Speicherung und Zuordnung durchführt, nach der Ermittlung der geeigneten Zuordnung direkt, eine Verbindung zwischen erstem und zweitem Telekommunikationspartner aufzubauen.

## Beschreibung

Die Erfindung betrifft ein Verfahren und eine Vorrichtung zum automatischen Zusammenschalten von Kommunikationsteilnehmern, insbesondere Anbietern und Nachfragern von Informationen, Dienstleistungen und Waren.

In vielen Bereichen des täglichen Lebens finden sich Situationen, wo Nachfrager und Anbieter zusammenfinden müssen. Dieses wird derzeit auf vielfältige Weise gelöst:
- im Privaten Bereich etwa durch Kleinanzeigen, Annoncen in Tageszeitungen, Handzettel, zunehmend auch im Internet etc..
- im Öffentlichen Bereich auch mit Hilfe von Datenbank Systemen, beispielsweise Angebot und Nachfrage von Arbeit im Arbeitsamt oder einem anderen privaten Arbeitsvermittler mit Hilfe der dort tätigen Angestellten und Systeme, welche die Angebote enthalten.

Das Vorgehen ist dabei im Wesentlichen immer identisch:
- das Angebot (z. B. Arbeitsplatz oder Arbeitskraft) wird eingegeben, incl. einer Chiffre-Nummer, Adresse oder Telefonnummer, unter der der Anbieter erreichbar ist,
- eventuell mit einem Zwischenschritt, in welchem das Angebot in eine passende Form (z. B. Anzeigengröße) übertragen wird,
- ein Nachfrager muß das Angebot durchsuchen,
- bei einem passenden Angebot die Nummer oder Adresse notieren, und
- den Kontakt in einem weiteren Schritt selbständig herstellen.

Bislang sind keine technischen Lösungen bekannt, welche dieses Vorgehen vereinfachen und unterstützen.

Aufgabe der Erfindung ist es, eine technische Lösung anzugeben, wie passende Anbieter und Nachfrager gefunden werden können. Weiterhin ist es Aufgabe der Erfindung, zwischen den ermittelten, zueinander passenden Kommunikationsteilnehmern eine Verbindung herzustellen.

Diese Aufgabe wird gelöst durch ein Verfahren gemäß Patentanspruch 1 und durch eine Vorrichtung gemäß Patentanspruch 9.

Das erfindungsgemäße Verfahren sieht vor, daß eine Eingabe von erster (Angebots-) Information und zweiter (Nachfrage) Information geschieht. Danach wird ein Vergleich ausgeführt und die zur zweiten Information passende erste Information ermittelt. Der entscheidende Schritt sieht dann weitere, automatisch ausgeführte Aktionen vor, mit Hilfe der ersten und zweiten Information.

Weiterhin wird eine erfindungsgemäße Vorrichtung beansprucht, zur Durchführung des Verfahrens.

In vielen Bereichen kann die erfindungsgemäße Lösung in vorteilhafter Weise eingesetzt werden:
- Arbeitsmarkt, auch Praktikumsplätze
- Teleshopping (welcher Anbieter hat das gesuchte Produkt/die gesuchte Dienstleistung zum günstigsten Preis?)
- Reisemarkt
- Kleinanzeigen, Second Hand
- Info-Hotlines
- Transportkapazitäten, freie Plätze in Bahn/Flugzeug...

Vorteilhafte Ausgestaltungen und Weiterbildungen sind in den Unteransprüchen angegeben.

Die gespeicherten Informationen können in einer Ausgestaltungsform mit zusätzlichen, dem Kommunikationssystem bereits bekannte Informationen, wie Rufnummer, Teilnehmername/ - adresse ergänzt werden, ohne daß der die Informationen eingebende Kommunikationsteilnehmer diese explizit eingeben muß. Daß System ergänzt diese Informationen selbsttätig vor der Speicherung der Daten und verwendet sie zur weiteren Auswertung.

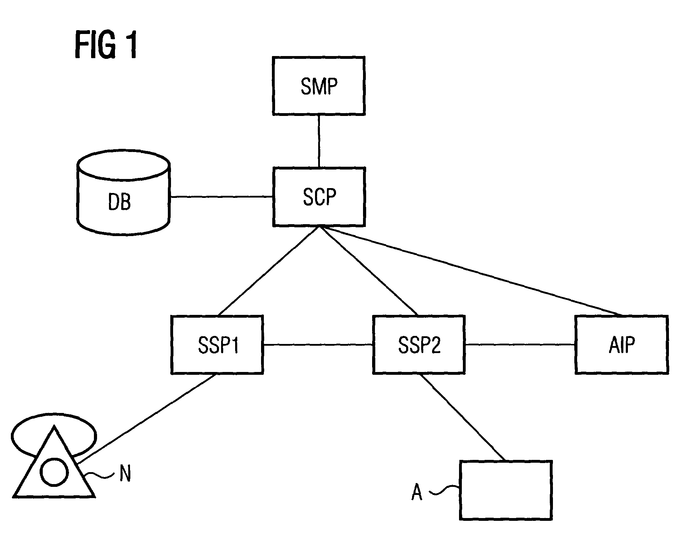

Zur Realisierung der erfindungsgemäßen Idee kann man beispielsweise die Technik der intelligenten Netze heranziehen, welche das Anbieten von Telekommunikationsdiensten (auch sogenannten Mehrwertdiensten, siehe dazu auch die ITU Normen Q.1200 ff) ermöglicht. Eine Darstellung der Realisierung findet sich in Figur 1.
Die Speicherung der Daten kann zentral geschehen, oder auch in einer seperaten, für den Zweck des beschriebenen Telekommunikationsdienstes verwendeten Datenbank. Hierbei können alle gängigen Datenbankmechanismen zur Ermittlung der geeigneten Datensätze mit Anbieterinformationen herangezogen werden.

Interessant ist in manchen der angeführten Verwendungszwecke die geographische Lage des Anbieters: entweder Anbieter und Nachfrager sind nicht weiter als xx Kilometer oder xx Landkreise (Rufnummernkreise) voneinander entfernt, oder der Nachfrager kann ein ,Wunschgebiet' angeben, welches von seiner Nachfrage abgedeckt werden soll.

Die Eingabe von Such- und Angebotsinformation kann in einer weiteren Ausgestaltungsform in einem Eingabe-Dialog über ein Endgerät gesteuert werden.
Beispiel Telefon: mittels DTMF Menü Wahl kann der Anbieter, der sich in einem speziellen Dienst eingewählt hat, die Charakteristika seines Angebots / seiner Nachfrage (etwa Automarkt: Marke, Farbe, Alter, Hubraum etc) über die Tastatur seines Telefons eingeben.
Beispiel Internet: eine auf den jeweiligen Dienst abgestimmte Eingabemaske ermöglicht es dem Anbieter / Nachfrager, über die Tastatur die Informationen einzugeben.

Die weiteren Aktionen können in einer Ausgestaltungsform des erfindungsgemäßen Verfahren nach Ermittlung der passenden Paare für den Nachfrager eine Liste generieren, welche Angaben enthält, die es dem Nachfrager ermöglichen, mit dem geeigneten Anbieter Kontakt aufzunehmen.
Diese Liste ist in ihren Bestandteilen konfigurierbar.
Es können dabei zum Beispiel bei der Eingabe des Angebots zusätzlich zu den eingegebenen Daten ermittelte Kommunikationsinformationen (wie die Rufnummer / Adresse des Anbieters) mit eingebracht werden.
Die Liste kann dann in beliebiger Form an den zweiten Kommunikationsteilnehmer (Nachfrager) gesendet werden, etwa als Fax, Email, SMS oder ähnliches.

Komfortabler ist eine zweite Ausgestaltungsform, in welcher von der zentralen Vorrichtung, welche Speicherung und Zuordnung durchführt, nach der Ermittlung der geeigneten Zuordnung direkt versucht wird, eine Verbindung zwischen erstem und zweitem Telekommunikationspartner aufzubauen.
Dazu wird zuerst von der zentralen Instanz eine erste Verbindung zu dem zweiten Telekommunikationspartner (Nachfrager) aufgebaut, um eine Kommunikationsbereitschaft abzufragen. Besteht diese, so versucht die zentrale Instanz, eine Verbin-dung zu dem ersten Telekommunikationspartner (der ermittelte Anbieter) aufzubauen. Ist dieser Versuch erfolgreich, so können Anbieter und Nachfrager direkt miteinander kommunizieren.

Ist der Versuch jedoch nicht erfolgreich, und hat die zentrale Instanz mehr als einen geeigneten ersten Telekommunikationspartner (Anbieter) ermittelt, so kann die zentrale Instanz nun den nächsten ,in der Liste' anwählen und wiederum versuchen, eine Verbindung herzustellen.

Im folgenden wird die Erfindung anhand von Ausführungsbeispielen erläutert. Dabei zeigen
Figur 1 eine erfindungsgemäße Vorrichtung, und
Figur 2 und 3 einen Ablaufplan des erfindungsgemäßen Verfahrens, mit Eingabe der ersten und zweiten Informationen und daraus resultierenden Aktionen.

In Figur 1 ist ein Ausschnitt eines Intelligenten Netzes dargestellt.
Ein erster Telekommunikationsteilnehmer A ist über einen Vermittlungsknoten SSP2 zu einem Telekommunikationsnetz verbunden. Dabei kann es sich bei dem Endgerät zum Beispiel um ein herkömmliches Telefon handeln oder auch eine Verbindung z. B. über ein Gateway und geeignete Software zu einem PC bestehen, so daß der Anbieter seine ersten Informationen zum Beispiel über einen Webbrowser und das Internet eingibt.

Ein zweiter Telekommunikationsteilnehmer (Nachfrager) N ist ebenfalls über einen Vermittlungsknoten SSP1 angeschlossen. Sobald dieser einen speziellen Dienst (z. B. Automarkt, Teleshopping usw.) anwählt, wird sein Ruf automatisch an die zentrale Instanz SCP durchgestellt. Ebenso wie beim ersten Telekommunikationsteilnehmer wird ein Abfragedialog gestartet, mittels deren der Nachfrager seine Informationen eingibt. Dieses kann auch über Ansagen gesteuert sein, die entweder von dem Vermittlungsrechner SSP oder einer dafür geeigneten Vorrichtung AIP dem Informationen-Eingebenden vorgespielt werden, um die Eingabe zu steuern und ihn zu informieren, sobald die Eingabe abgeschlossen ist und er seinen Dienstaufruf beenden kann (zum Beispiel mit einer Textansage "Wir danken für Ihren Auftrag. Die Verbindung wird nun unterbrochen." oder ähnlichem.
Sobald die zentrale Instanz SCP die Informationen gesammelt hat, wird in einer Datenbank DB, welche im SCP vorhanden oder separat gehalten werden kann, nach geeigneten ersten (Angebots-) Informationen gesucht.
Findet er passende Eingaben, so wird automatisch eine Verbindung zwischen dem zweiten Kommunikationsteilnehmer N und dem ersten Kommunikationsteilnehmer A aufgebaut, sofern dies möglich ist.

Zur Konfigurierung dieses Mehrwertdienstes ist eine Management-Instanz SMP vorgesehen. Über diese kann die Art des angebotenen Dienstes den Wünschen des Dienstanbieters angepaßt werden:
- abgefragte Informationen
- Ansagetexte bzw. Eingabemasken
- Reaktion bei positivem Vergleich
- Vergebührung bei erfolgreicher Vermittlung.

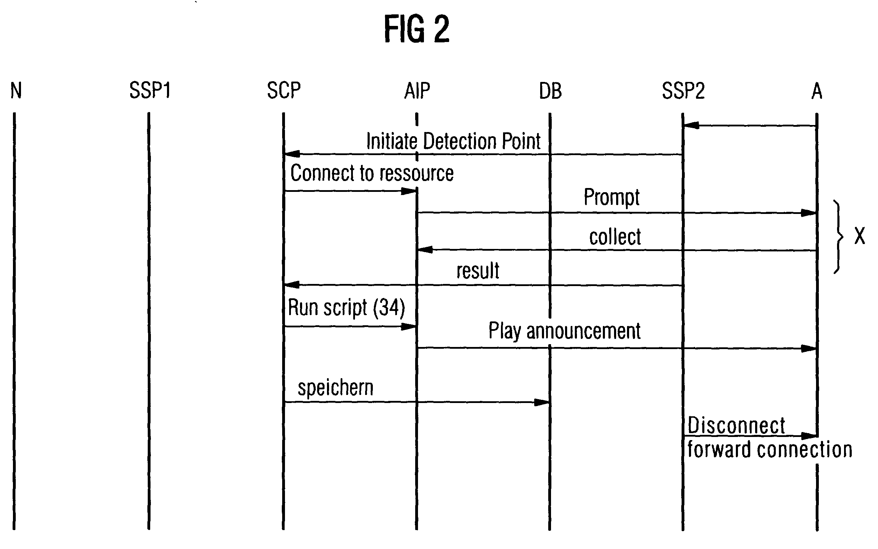

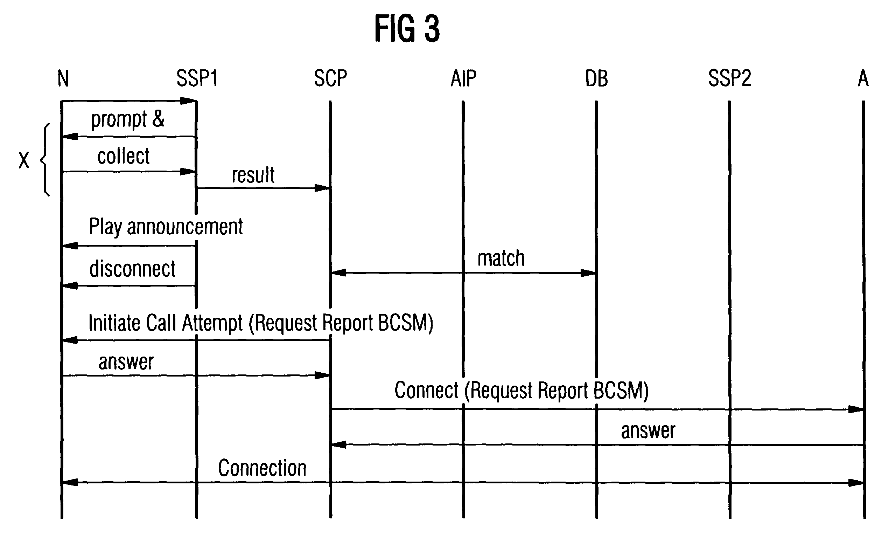

In Figur 2 wird ein Ablaufdiagramm aufgezeigt, wie das erfindungsgemäße Verfahren durchgeführt wird, insbesondere die Eingabe von erster (Angebots) Information. Figur 3 stellt dann die Eingabe der zweiten (Nachfrage) Informationen dar, die Ermittlung der passenden Information und einen Verbindungsaufbau der beiden Telekommunikationsteilnehmer.

Der Anbieter A will sein Angebot in dem ausgewählten Dienst zur Verfügung stellen. Dafür ruft er über die Vermittlungsstelle SSP2 den gewünschten Dienst auf.
Die Vermittlungsstelle SSP2 erkennt (z. B. aufgrund der gewählten Dienstenummer), daß es sich um einen entsprechenden Dienst handelt, und stellt eine Verbindung zur zentralen Instanz SCP her (Initiate Detection Point). Diese wiederum erkennt die Notwendigkeit der Anfrage von Informationen und initialisiert die Ansageeinheit AIP (Connect to ressource). Ein Abfragedialog wird eingeleitet, mittels mehrfacher menügesteuerter Anfragen Prompt und Übertragung der Ergebnisse bzw. Sammeln der Ergebnisse collect. Der Anfragedialog wird durchgeführt, bis die benötigten Informationen gesammelt sind x. Dann wird die Information an die Datenbank DB durchgegeben result (an den SCP) und speichern (an die Datenbank).
Der erste Telekommunikationteilnehmer A wird mit einer Ansage darüber informiert, daß der Anfragedialog nun beendet ist: Play announcement. Dann wird die Verbindung unterbrochen.

Wählt sich nun später ein zweiter Kommunikationsteilnehmer den Dienst anwählt, um eine Nachfrage zu starten (zum Beispiel durch eine gesonderte Dienstenummer oder durch eine erste Abtrage) so wird ebenfalls ein Abtragedialog x gestartet, mit Abfragen prompt und Informationssammeln collect, sowie eine Meldung der zweiten Informationen result nach beendeter Abfrage.
Es ist auch möglich, daß die beendende Ansage nicht durch ein seperates Ansagemodul sondern durch eine Funktionalität in dem Vermittlungsknoten selber abgespielt wird: Play announcement. Dann wird ebenfalls die Verbindung unterbrochen disconnect.

Bereits währenddessen kann in den bereits gespeicherten (Angebots-) Informationen nach einem/mehreren passenden Datensätzen gesucht werden, match.
Das Ergebnis der Suche wird dann zurückgemeldet: es kann das erste passende sein, die ersten 5 (beliebig viele), oder auch eine Durchsuchung der kompletten Angebots-Datensätze, bevor eine Rückmeldung erzeugt wird.

Dann wird der zweite Telekommunikationspartner N von der zentralen Instanz SCP informiert, indem ein Verbindungsversuch gestartet wird, Initiate Call Attempt (Request Report BCSM) Sobald N den Ruf beantwortet, answer, wird er über eine erfolgreiche Suche in den Angebotsinformationen informiert und eine Verbindung zu dem ausgewählten Anbieter A aufgebaut. Klappt dies, answer, so kann der Anbieter mit dem Nachfrager kommunizieren.

### Abkürzungsverzeichnis

- A: erster Kommunikationsteilnehmer (Anbieter)
- AIP: Assisting Intelligent Peripheral (Ansagemodul)
- DB: Datenbank
- ITU: International Telecommunication Union
- N: zweiter Kommunikationsteilnehmer (Nachfrager)
- SCP: Service Control Point
- SMP: Service Management Point
- SSP: Service Switching Point (Vermittlungsstelle)

## Patentansprüche

1. Verfahren zum Vermitteln von Kommunikationsteilnehmern unter Verwendung von nicht-kommunikationsspezifischer Information, bestehend aus folgenden Schritten:
a) von mindestens einem ersten Kommunikationsteilnehmer (Anbieter) wird Angebots-Information eingegeben,
b) die Information wird gespeichert,
c) von einem zweiten Kommunikationsteilnehmer (Nachfrager) Such-Information (Suchkriterien) eingegeben wird,
d) die Such-Information wird mit der bereits zentral gespeicherten Angebots-Information verglichen,
e) der zur gefundenen passenden Angebots-Information gehörige erste Kommunikationsteilnehmer wird ermittelt,
f) weitere Aktionen geschehen, um den zweiten Kommunikationsteilnehmer über die Angebots-Informationen zu informieren.

2. Verfahren nach Patentanspruch 1,
gekennzeichnet dadurch, daß
die Angebots-Information zentral in einem definierten, vergleichbaren Format gespeichert sind.

3. Verfahren nach Patentanspruch 1 oder 2,
gekennzeichnet dadurch, daß
die Angebots-Informationen durch zusätzliche ermittelbare kommunikationsspezifische Informationen ergänzt werden.

4. Verfahren nach einem der vorherigen Patentansprüche,
dadurch gekennzeichnet, daß
die Eingabe von Such-Information und/oder Angebots-Information in einem Abfrage-Dialog geschieht.

5. Verfahren nach einem der vorherigen Patentansprüche,
dadurch gekennzeichnet, daß
nach dem Vergleich von Angebots- und Such-Information eine Liste generiert wird, welche die passende Angebots-Information enthält
und diese dem zweiten Kommunikationsteilnehmer zugesendet wird.

6. Verfahren nach Patentanspruch 5,
dadurch gekennzeichnet, daß
die generierte Liste kommunikations-spezifische Informationen enthält, die während der Eingabe der Angebots-Information durch den ersten Kommunikationsteilnehmer ermittelt wurden.

7. Verfahren nach Patentanspruch 1 bis 4,
dadurch gekennzeichnet, daß
nach dem Vergleich von Angebots- und Such-Information eine Verbindung zu dem zweiten Kommunikationsteilnehmer zu einem ersten Kommunikationsteilnehmer aufgebaut wird.

8. Verfahren nach Patentanspruch 7,
dadurch gekennzeichnet, daß
a) der Vergleich von Angebots- und Such-Information mehrere passende Angebots-Informationen ermittelt hat und
b) ein Verbindungsaufbau von dem zweiten Kommunikationsteilnehmer zu einem ausgewählten ersten Kommunikationsteilnehmer mit passenden Angebots-Informationen nicht erfolgreich ist,
c) einen nächsten ersten Kommunikationsteilnehmer mit passenden Angebots-Informationen auswählt und
d) ein Verbindungsaufbau von dem zweiten Kommunikationsteilnehmer zu diesem nächsten ersten Kommunikationsteilnehmer eine Verbindung aufgebaut wird.

9. Vorrichtung zum Vermitteln von Kommunikationsteilnehmern in einem Kommunikationsnetz unter Verwendung von nichtkommunikationsspezifischer Information mit Mitteln zum Empfang von von eingegebener Angebots- und Suchinformation, und
mit Speichermitteln zum Speichern der von einem Kommunikationsteilnehmer eingegebenen Information, und mit Mitteln zum Vergleich von Angebots- und Suchinformation, und
mit Mitteln zur Weiterbearbeitung der zu einer eingegebenen Such-Information gefundenen Angebots-Information.
